(19) Europäisches Patentamt
European Patent Office
Office européen des brevets

(11) Publication number: **0 669 284 A1**

(12) **EUROPEAN PATENT APPLICATION**

(21) Application number: **94301376.3**

(51) Int. Cl.6: **C01D 5/08**

(22) Date of filing: **25.02.94**

(43) Date of publication of application:
**30.08.95 Bulletin 95/35**

(84) Designated Contracting States:
**DE ES FR NL PT**

(71) Applicant: **GRAESSER CONTACTORS Ltd.**
**20 New Bond Street**
**London W1Y 9HF (GB)**

(72) Inventor: **Robinson, Lee Fisher**
**Graesser Contractors Ltd,**
**20 New Bond Street**
**London W1Y 9HF (GB)**
Inventor: **Coleby, John**
**Graesser Contractors Ltd,**
**20 New Bond Street**
**London W1Y 9HF (GB)**

(74) Representative: **March, Gary Clifford**
**Batchellor, Kirk & Co.**
**2 Pear Tree Court**
**Farringdon Road**
**London EC1R 0DS (GB)**

(54) **Precipitation process for potassium sulphate.**

(57) A process for precipitating potassium sulphate from an aqueous solution containing potassium ions, which comprises

(i) directing a stream of water to flow into a mixing vessel,
(ii) adding to the mixing vessel a supply of soluble inorganic potassium compound,
(iii) adding to the mixing vessel a supply of soluble inorganic sulphate other than potassium sulphate,
(iv) maintaining the contents of said mixing vessel at a temperature above 40 °C whilst causing or permitting the potassium compound and sulphate to at least partially dissolve forming a solution thereof in said flowing stream of water,
(v) transferring at least part of the solution formed in step (iv) to a precipitation vessel maintained at a temperature such that the transferred solution is cooled or allowed to cool below 40 °C, whereby
(vi) solid potassium sulphate precipitates out of solution in the precipitation vessel as a result of the temperature difference between mixing vessel and precipitating vessel, and
(vii) at least part of the precipitated potassium sulphate is removed from the precipitation vessel.

EP 0 669 284 A1

This invention is concerned with a process for forming and precipitating potassium sulphate from an aqueous solution containing potassium ions.

Considerable quantities of potassium chloride are provided as by products in various industries, but this salt has limited commercial application. On the other hand, potassium sulphate has more value, particularly as a component of fertilisers, and it is desirable to be able to convert potassium chloride to potassium sulphate on an economically viable scale.

The invention has for one its objectives, the provision of a process capable of precipitating potassium sulphate from an aqueous stream containing both potassium and sulphate ions, in solution.

According to this invention, there is provided a process for precipitating potassium sulphate from an aqueous solution containing potassium ions, which comprises

(i) directing a stream of water to flow into a mixing vessel,

(ii) adding to the mixing vessel a supply of soluble inorganic potassium compound,

(iii) adding to the mixing vessel a supply of soluble inorganic sulphate other than potassium sulphate,

(iv) maintaining the contents of said mixing vessel at a temperature above 40 °C whilst causing or permitting the potassium compound and sulphate to at least partially dissolve forming a solution thereof in said flowing stream of water,

(v) transferring at least part of the solution formed in step (iv) to a precipitation vessel maintained at a temperature such that the transferred solution is cooled or allowed to cool below 40 °C, whereby

(vi) solid potassium sulphate precipitates out of solution in the precipitation vessel as a result of the temperature difference between mixing vessel and precipitating vessel, and

(vii) at least part of the precipitated potassium sulphate is removed from the precipitation vessel.

Conveniently a water supply is directed into a mixing tank, having stirring means, wherein e.g. solid sodium sulphate and potassium chloride can be fed continuously, and dissolved in water to render the process continuous. The temperature of the mixing tank is preferably above 50 °C, more preferably above 60 °C, even more preferably above 70 °C and most preferably in the range 90 °-100 °C. The temperature of the precipitation vessel is preferably maintained below 34 °C and even more preferably 33 °C or lower, such as 33 °C to 28 °C. The amount of sulphate added is preferably $\frac{1}{2}$ the molar amount of potassium compound, to agree with the stoichiometry of the reaction, i.e.

$$Na_2SO_4 + 2KCl \quad K_2SO_4 + 2NaCl$$

Preferably both vessels are continuously stirred to aid dissolution and precipitation. The total content of the precipitation vessel can be supplied to a separator, such as a centrifugal decanter or a series of more than one, in which the waste water is removed as a flow of effluent, mainly containing dissolved chloride, such as sodium chloride, if the potassium compound used is chloride.

A secondary continuous centrifugal decanter can be supplied with wash water and arranged to discharge substantially pure potassium sulphate. The wash water can be fed back into the water supply line although it may be advantageous to monitor the chloride ion concentration in such wash water and adjust the amount of e.g. sulphate and/or potassium compound added to the mixing vessel.

In order that the invention may be illustrated, more easily appreciated and readily carried into effect, embodiments thereof will now be described, purely by way of non-limiting examples only, with reference to the accompanying drawing, which shows in schematic form, an apparatus and flow diagram for carrying out a process for precipitating potassium sulphate.

Referring to the drawing, we provide a water supply line 1 providing an aqueous flow into a mixing vessel 2, equipped with stirrer 5 and maintained at 90 °C to 100 °C, preferably of the order 100 °C. Feedstock for the vessel 2, comprises solid sodium sulphate and 2 moles of solid potassium chloride per mole of sodium sulphate. This is fed via hopper or other supply line 3. The hot mixture is continuously drawn off at conduit 6, leading to precipitation vessel 7 maintained at a much lower temperature than mixing tank, but nevertheless still above ambient temperature, at 28 ° to 34 °C, preferably at 33 °C. It has its own independent stirrer 5 for mixing the contents of the vessel 7, partly liquid 8 and partly precipitated potassium sulphate 9.

The full content of the precipitation vessel 7 is drawn off continuously at conduit 10, and fed to a primary continuous centrifugal decanter 11 having an effluent take-off line 12a, mainly discharging sodium chloride solution, as effluent, although there will be a fraction of dissolved potassium sulphate.

The primary decanter 11 is connected in series flow with a secondary such decanter 13, via connecting conduit 12. Secondary decanter 13 is provided with a flow of wash water 14 which exits (having washed the solid potassium sulphate which collects inside decanter 13) via a feedback supply line 16, connected to the water supply line 1. Substantially pure potassium sulphate is collected or otherwise discharged from

secondary decanter 13, at outlet 15.

The concentration of the chloride ion in feedback line 16, and/or effluent take-off 12a can be monitored, and the results used to modify input amount of potassium chloride. Ideally the level of chloride ion in the effluent from 12a should be kept approximately constant.

The following tables represent solubilities and yield calculations, for a typical run of the apparatus described above.

Table 1

| Solubility of all species in system | | | |
|---|---|---|---|
| | | 30 °C | 100 °C |
| gms in 100 gms Water | KCl | 37.0 | 56.7 |
| | NaCl | 36.3 | 39.8 |
| | $K_2SO_4$ | 12.97 | 24.1 |
| | $Na_2SO_4$ | 48.8 (40 °C) | 42.5 |

Table 2 - Liquid Effluent

| | | | |
|---|---|---|---|
| $H_2O$ | 41.39 | ≡ | 100 |
| NaCl | 15.18 | ≡ | 37.6 (x 3.12 = 117) |
| $K_2SO_4$ | 5.12 | ≡ | 12.4 (x 3.12 = 38.6) |

| | | | |
|---|---|---|---|
| Input ≡ | 2NaCl | 117 | $K_2SO_4$ in effluent 38.6 |
| | $K_2SO_4$ | 174 | $K_2SO_4$ recovered 174 - 38.6 = 135.4 |

$$\text{Yield} = \frac{135.4}{174} = 79\%$$

To calculate yield from 2 moles KCl : 2 moles NaCl (117) are formed. The volume of the effluent is increased until it contains 2 moles (117) NaCl (factor 3.12). Then lost $K_2SO_4$ is 38.6 from 174 theoretical yield.

$$\text{Hence \% yield} = \frac{135.4}{174} = 79\%.$$

## Claims

**1.** A process for precipitating potassium sulphate from an aqueous solution containing potassium ions, which comprises

(i) directing a stream of water to flow into a mixing vessel,

(ii) adding to the mixing vessel a supply of soluble inorganic potassium compound,

(iii) adding to the mixing vessel a supply of soluble inorganic sulphate other than potassium sulphate,

(iv) maintaining the contents of said mixing vessel at a temperature above 40 °C whilst causing or permitting the potassium compound and sulphate to at least partially dissolve forming a solution thereof in said flowing stream of water,
(v) transferring at least part of the solution formed in step (iv) to a precipitation vessel maintained at a temperature such that the transferred solution is cooled or allowed to cool below 40 °C, whereby
(vi) solid potassium sulphate precipitates out of solution in the precipitation vessel as a result of the temperature difference between mixing vessel and precipitating vessel, and
(vii) at least part of the precipitated potassium sulphate is removed from the precipitation vessel.

**2.** A process as claimed in claim 1 wherein a water supply is directed into a mixing tank wherein sulphate and chloride compounds are continuously fed and dissolved in the water to render the process continuous.

**3.** A process as claimed in claim 1 or 2 wherein the temperature of the mixing vessel is maintained above 50 °C.

**4.** A process as claimed in claim 3 wherein the temperature is 90 °C to 100 °C.

**5.** A process as claimed in any preceding claim wherein the temperature of the precipitation vessel is maintained below 34 °C.

**6.** A process as claimed in claim 5 wherein the temperature is 28 °C to 33 °C.

**7.** A process as claimed in any preceding claim wherein the amount of sulphate added is about one half the molar amount of potassium compound added.

**8.** A process as claimed in any preceding claim wherein the contents of the precipitation vessel are supplied to one or more separators.

**9.** A process as claimed in claim 8 wherein the or each separator comprises a centrifugal decanter from which waste water is removed.

**10.** A process as claimed in claim 9 wherein a secondary continuous centrifugal decanter is used, which is supplied with wash water and arranged to discharge the potassium sulphate.

**11.** A process as claimed in claim 10 wherein said wash water is arranged to be fed into the supply line which constitutes said stream of water, whilst chloride ion concentration in said wash water is monitored.

**12.** A process as claimed in claim 11 wherein the amount of sulphate and/or potassium compound added to the mixing vessel is adjusted according the level of chloride ion concentration in said wash water.

**13.** A process of precipitating potassium sulphate substantially as herein described.

**14.** A process for precipitating potassium sulphate substantially as herein exemplified in any example.

**15.** Apparatus constructed and arranged to carry into effect a process as claimed in any preceding claim, substantially as illustrated in the accompany drawing and described with reference to any example.

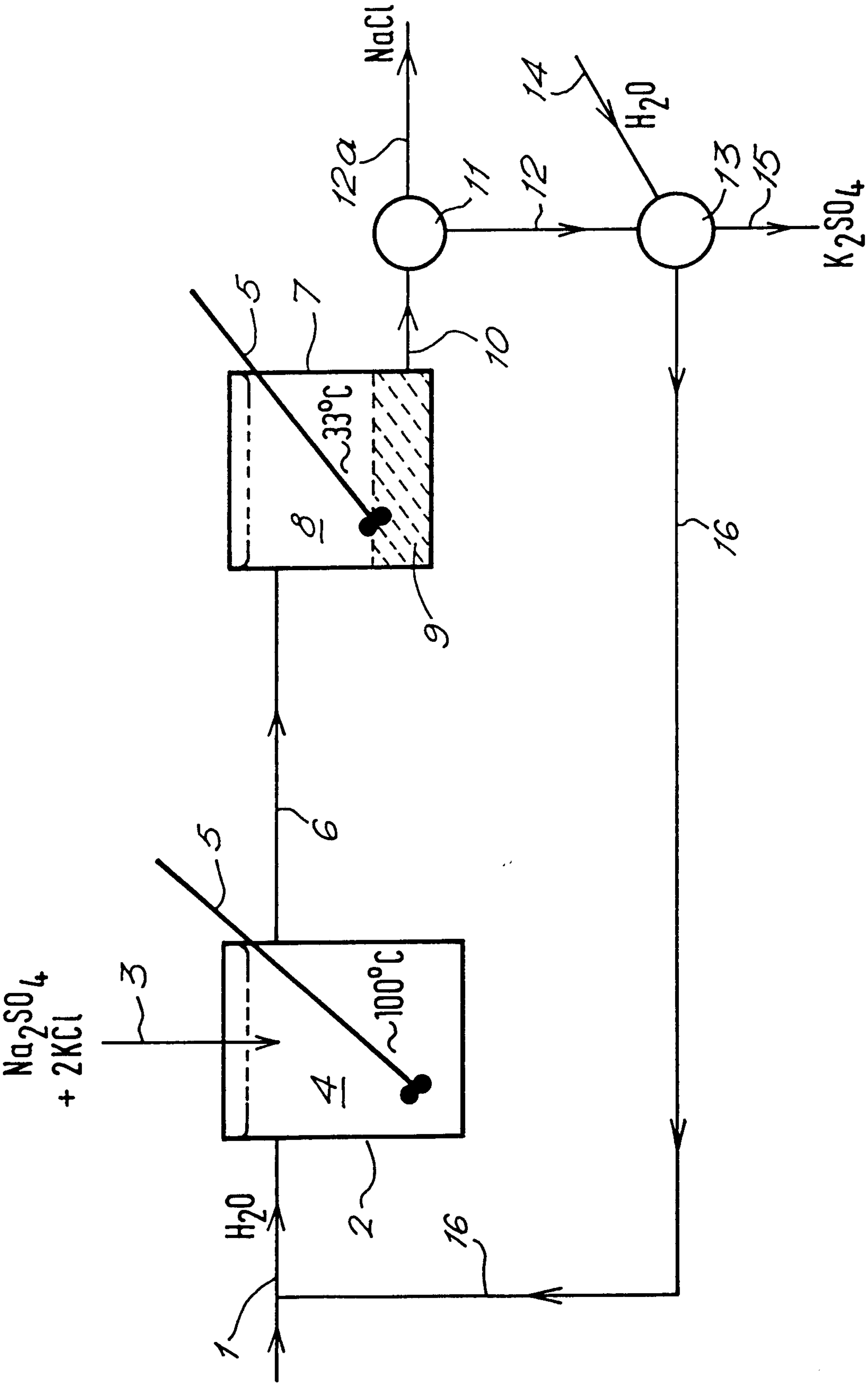
NaCl
12a
11
12
14
H2O
13
15
K2SO4
5
7
10
~33°C
8
9
16
Na2SO4
+ 2KCl
3
5
6
~100°C
4
2
H2O
16
1

European Patent Office

# EUROPEAN SEARCH REPORT

Application Number
EP 94 30 1376

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-1 990 896 (G.A.CONNELL) 12 February 1935<br>* column 1, line 7 - line 34 *<br>* column 2, line 34 - column 3, line 2 *<br>--- | 1,5,7,8, 13-15 | C01D5/08 |
| X | GB-A-778 836 (MAKHTSAVEI ISRAEL) 10 July 1957<br>* page 1, line 66 - line 80 *<br>* examples *<br>--- | 1,8,11 | |
| A | EP-A-0 199 104 (R.PHINNEY)<br>* column 2, line 34 - column 3, line 19 *<br>* claim 1 *<br>--- | 1,2,7,8 | |
| A | US-A-4 215 100 (I.D.SOKOLOV ET AL.)<br>* column 2, line 45 - column 3, line 15 *<br>* claim 1 *<br>--- | 1,3,5,11 | |
| E | DATABASE WPI<br>Week 9408,<br>Derwent Publications Ltd., London, GB;<br>AN 94-509247/08<br>& GB-A-2 270 308 (GRAESSOR CONTACTORS LTD.) 9 March 1994<br>* abstract *<br>----- | 1-15 | TECHNICAL FIELDS SEARCHED (Int.Cl.6)<br>C01D |

The present search report has been drawn up for all claims

| Place of search | Date of completion of the search | Examiner |
|---|---|---|
| THE HAGUE | 25 July 1994 | Van der Poel, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document